**Europäisches Patentamt**

**European Patent Office**

**Office européen des brevets**

(19)

(11) Numéro de publication: **0 158 569**
**B1**

(12)

# FASCICULE DE BREVET EUROPEEN

(45) Date de publication du fascicule du brevet:
**16.08.89**

(21) Numéro de dépôt: **85420011.0**

(22) Date de dépôt: **21.01.85**

(51) Int. Cl.⁴: **E 02 B 17/00**, G 01 N 29/04, G 01 S 15/88

(54) **Procédé et dispositif de recherche et de caractérisation de défauts d'une structure métallique connue immergée.**

(30) Priorité: **26.01.84 FR 8401426**

(43) Date de publication de la demande:
**16.10.85 Bulletin 85/42**

(45) Mention de la délivrance du brevet:
**16.08.89 Bulletin 89/33**

(84) Etats contractants désignés:
**GB IT NL**

(56) Documents cités:
**FR-A- 2 172 325**
**US-A- 3 426 585**
**US-A- 4 001 764**

**OIL & GAS JOURNAL, vol. 80, no. 8, février 1982, pages 94,99,100,103, Tulsa, Oklahoma, US; H. CROHAS et al.: "Damage-detection monitoring method for offshore platforms is field-tested"**

(73) Titulaire: **METRAVIB Société Anonyme:, 64, Chemin des Mouilles B.P. 182, F-69130 Ecully (FR)**

(72) Inventeur: **Charles, Jöel, "Le Morillon" 27, Boulevard Grignan, F-83100 Toulon (FR)**
Inventeur: **Gaudriot, Lionel, Le Bourg, F-69380 Lozanne (FR)**
Inventeur: **Parot, Jean-Marc, "Le Renouveau" 30, Chemin de la Ronde, F-69160 Tassin La Demi Lune (FR)**

(74) Mandataire: **Ropital-Bonvarlet, Claude et al, Cabinet BEAU DE LOMENIE 99, Grande rue de la Guillotière, F-69007 Lyon (FR)**

## Description

L'invention concerne le domaine technique général des structures immergées et elle vise, plus particulièrement, le problème de la recherche et de la caractérisation de défauts éventuels présentés par tout ou partie des éléments constitutifs d'une telle structure.

L'invention concerne les structures métalliques immergées, de conformation géométrique connue, telles que planes, en caisson, ou encore et, plus spécialement selon l'invention, en treillis.

A titre d'exemple préférentiel, l'invention concerne les structures métalliques en treillis porteuses d'une plateforme du type de recherche ou d'exploitation des fonds sous-marins.

Les structures métalliques, de conformations diverses immergées, doivent faire l'objet, fréquemment, d'inspections en vue de la mise en évidence de zones éventuelles de défaut. De telles inspections ont pour but d'apprécier les éventuelles modifications de caractéristiques de résistance mécanique et d'évaluer si les conditions de sécurité requises sont toujours réunies.

Compte tenu de la faible visibilité régnant, le plus généralement, dans le milieu liquide et de l'importance et de la complexité des structres métalliques immergées, l'inspection de telles structures s'effectue par interventions humaines au moyen de scaphandres autonomes ou d'appareils de plongée. Les interventions locales, à caractère non destructif, impliquent un nettoyage préalable des surfaces à contrôler et le transport, ainsi que l'application directe, d'un moyen de détection de défaut, de tels moyens mettant en jeu des principes de nature optique, vibratoire ou ultrasonore.

On conçoit que de telles méthodes ne présentent pas une grande facilité de mise en œuvre, étant donné que la zone d'action est, dans tous les cas, très localisée. En outre, l'opération de nettoyage préalable des surfaces s'avère souvent délicate à mener à bien. Par ailleurs, le plongeur est astreint à évoluer à des profondeurs parfois grandes dans une structure qu'il ne peut que difficilement évaluer et au sein de laquelle il éprouve des difficultés certaines d'orientation, en particulier, en raison de la courte distance de vision que lui donne le milieu marin.

L'inspection d'une structure de type en treillis, dans de telles conditions, ne permet donc pas d'effectuer avec certitude un relevé de l'intégrité. De plus, elle est coûteuse et parfois dangereuse pour le personnel dont la période annuelle d'intervention est parfois très limitée, comme cela est le cas, notamment, en mer du Nord.

On a proposé, également, d'implanter des capteurs acoustiques situés à proximité des zones fragiles les plus sollicitées. Une telle proposition ne permet pas de réaliser une inspection intégrale d'une structure, à moins de mettre en œuvre des moyens techniques particulièrement onéreux.

Il a été proposé, également, de faire intervenir des électrodes de conduction chargées de mesurer électriquement le champ d'une chambre étanche placée à proximité des soudures de liaison des éléments constitutifs et sensibles à la pénétration d'eau par suite de fissuration. Une telle technique est excessivement onéreuse et implique, obligatoirement, des moyens de contrôle de fonctionnement des électrodes, afin de pouvoir compter sur la fiabilité des résultats obtenus.

Une autre solution proposée a été aussi de réaliser une mise en pression interne, individuelle ou par groupe, d'éléments tubulaires formant un treillis et d'analyser un débit de fuite éventuelle pour détecter une fissuration traversante. Une telle technique, également délicate et onéreuse, ne peut être envisagée sur l'ensemble d'une structure immergée et ne permet, en outre, de détecter que des défauts caractérisés par une fissure traversante de la paroi concernée.

Une technique vibratoire a été également préconisée pour analyser les réponses dynamiques aux sollicitations d'ensemble dues à la houle ou bien provoquées localement par des moyens appropriés. L'exploitation des résultats d'une telle technique devient particulièrement complexe au sein d'une structure en treillis et les résultats obtenus sur les résonances propres de la structure ne s'avèrent pas assez sensibles aux défauts de petites dimensions relatives que l'on cherche à détecter et à localiser.

On connaît, également, un système à ultrason pour l'inspection de piliers en immersion décrit dans le brevet US-A 3 426 585. Le système comprend un ensemble mécanique de support et d'immobilisation comportant des machoîres qui enserrent le pilier, ensemble sur lequel est montée une sonde acoustique déplaçable le long et autour du pilier. La sonde possède une source d'émission et de réception d'impulsion acoustique. En se déplaçant le long du pilier, les ondes électrosonores réfléchies par le pilier sont transmises, une fois converties en impulsions électriques, à un équipement de surface, où moyennant une série de traitements, les ondes d'impulsions réfléchies sont visualisées sur un oscilloscope et sensées représenter l'état de surface du pilier. En cas de détection de fissures, l'onde réfléchie est faible, voire inexistante et permet ainsi de visualiser la position et al forme de la fissure.

Le dispositif et le procédé mis en œuvre souffrent des mêmes inconvénients que les solutions précédemment décrites. Le procédé nécessite l'implantation avec plongeurs de l'ensemble de support et d'immobilisation préalablement à l'inspection et n'est pas utilisable au sein d'une structure en treillis. La précision de relevé des défauts de la structure à inspecter est telle que l'emploi du procédé est limité à la détection de défauts de surface majeurs.

L'invention vise à résoudre les inconvénients ci-dessus en proposant un nouveau procédé et un nouveau dispositif de recherche et de caractérisation de défauts, que l'on peut définir pour fixer les idées de l'ordre décimétrique, présentés par une structure métallique de type connu immergée, sans faire intervenir de moyens techniques implantés in situ ni la présence de plongeurs ou d'engins de plongée devant être stabilisés et orientés dans des directions spatiales précises, par rapport à une structure à explorer.

Un autre objet de l'invention est de proposer une nouvelle technique d'un coût d'exploitation notablement plus faible que les techniques connues et capable de fournir des résultats fiables de détection globale ou localisée d'une structure quelconque.

Un objet supplémentaire de l'invention est de proposer une technique de recherche et de caractérisation permettant à un opérateur, depuis un pupitre de commande, de procéder directement à la recherche et à la caractérisation des défauts éventuels.

Un autre objet de l'invention est d'offrir une technique de recherche et de caractérisation rapide et précise pouvent être mise en œuvre depuis la surface, sans nécessiter une opération préalable de nettoyage au moins partiel de la partie de la structure à explorer.

Un objet supplémentaire de l'invention est d'offrir une technique de recherche et de caractérisation permettant d'intéresser un champ d'action de grande étendue, jusqu'à l'ordre décamétrique, et d'effectuer, par conséquent, en un temps raisonnable, une vérification systématique totale d'une structure immergée connue, ce qui peut être considéré, avec les techniques actuelles, comme difficile, voire impossible, pour certaines structures immergées du moins.

Un autre objet de l'invention est d'offrir une technique de recherche et de caractérisation pouvant être mise en œuvre facilement au sein d'une structure en treillis, en résolvant, en même temps, le problème de localisation des moyens mis en œuvre par rapport à la structure à explorer.

Pour atteindre les buts ci-dessus, le procédé selon l'invention est caractérisé en ce qu'il consiste à:

– placer une sonde acoustique d'émission-réception à plusieurs capteurs,
– émettre au moins une impulsion acoustique ultra-sonore comprise entre 30 et 150 KHz,
– recueillir les signaux échos de n points brillants de la structure,
– déterminer les coordonnées angulaires par rapport à la sonde des points brillants par classement des informations de temps d'arrivée des divers échos aux divers capteurs de réception de la sonde, selon différentes suites d'instants caractéristiques des fronts d'ondes émanant de n points réfléchissants localisés,
– déterminer les coordonnées théoriques des différents points brillants par rapport à la structure,
– déterminer à partir de ces coordonnées la position de la sonde,
– afficher le diagramme des points brillants,
– comparer ce diagramme avec l'image théorique archivée de la partie locale correspondante de la strucuture,

– mettre en évidence, par comparaison, toute absence ou toute présence de points réfléchissants par rapport aux point brillants ou singuliers théoriques de la structure.

L'invention vise, également, un dispositif de recherche et de caractérisation de défauts comprenant:

– une sonde acoustique comportant:
un moyen de support et d'immobilisation relative dans le milieu liquide,
une source émettrice d'impulsions acoustiques,
une surface réceptrice sensible,
– un moyen de prétraitement des signaux échos comprenant au moins un préamplificateur,
– une unité de transmission des données prétraitées,
– et une unité principale de traitement comprenant des moyens de visualisation,

et est caractérisé en ce que:

– la sonde acoustique comporte une surface réceptrice formée de x cellules sensibles,
– le moyen de prétraitement comprend pour chaque cellule sensible:
un filtre associé à un module de comparaison,
et un module d'adressage-étiquetage des signaux filtrés,
– l'unité principale de traitement comprend:
un calculateur,
une mémoire de masse,
des moyens de visualisation tridimensionnels.

Diverses autres caractéristiques ressortent de la description faite ci-dessous en référence aux dessins annexés qui montrent, à titre d'exemple non limitatif, la mise en œuvre de l'objet de l'invention.

La fig. 1 est une perspective schématique illustrant la mise en œuvre de l'objet de l'invention.
La fig. 2 est une élévation montrant, à plus grande échelle, l'un des éléments constitutifs de l'objet de l'invention.
La fig. 3 est un schéma de certains des moyens de l'invention.-
La fig. 4 est un schéma illustrant une première phase de mise en œuvre de l'invention.
La fig. 5 est une vue schématique mettant en évidence l'une des phase du procédé de détection selon l'invention.
La fig. 6 est une élévation illustrant une recherche de caractérisation au sein d'une structure en treillis par référence à la fig. 4.
La fig. 7 est une perspective partielle illustrant une propriété physique par l'invention.
La fig. 8 est une représentation graphique du cheminement d'un signal rétrodiffusé par un défaut longitudinal dans le cadre de la mise en œuvre de l'invention.
La fig. 9 est une représentation graphique du cheminement d'un signal rétrodiffusé par un défaut transversal.

La fig. 10 est une représentation graphique du cheminement d'un signal rétrodiffusé par un défaut oblique.

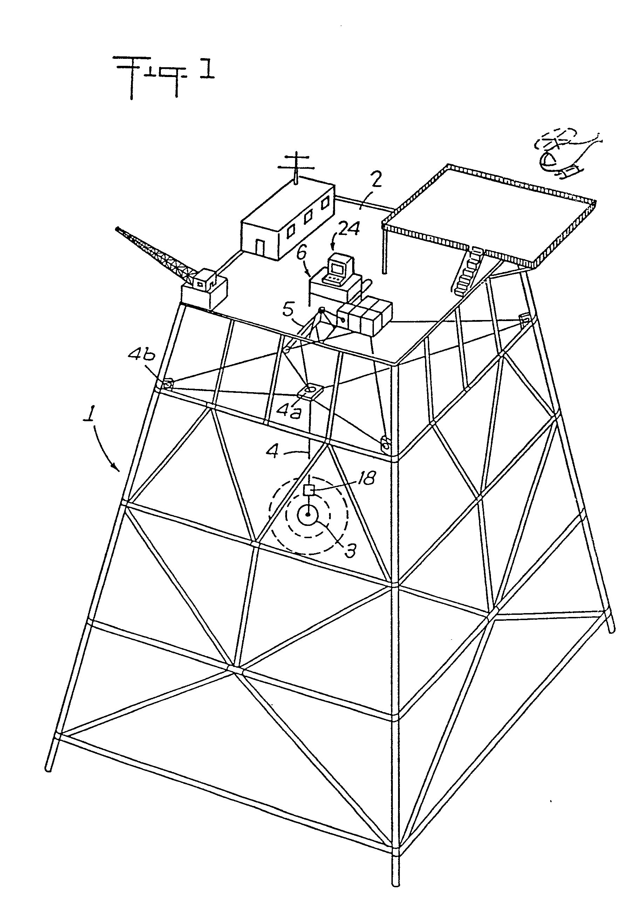

La fig. 1 montre une structure 1 immergée, par exemple du type en treillis tubulaire, destinée à supporter, au-dessus du niveau de l'eau, une plateforme 2 présentant une aire d'accès ou de travail.

L'exemple illustré est donné à titre non limitatif, car l'objet de l'invention peut être mis en œuvre our la recherche et la caractérisation de défauts d'une structure non nécessairement à base de treillis métallique. A titre d'exemple, l'objet de l'invention pourrait être mis en œuvre, également, pour la recherche et la caractérisation de défauts dans une structure métallique se présentant sous la forme d'une paroi ou d'un caisson.

Des structures du type ci-dessus doivent être explorées et examinées attentivement, afin du détecter, non pas uniquement le maintien de leur intégralité, mais aussi l'apparition éventuelle de défauts susceptibles, en fonction de leur évolution dans le temps, de nuire aux caractéristiques de sécurité.

Le problème posé est donc celui de pouvoir effectuer rapidement l'examen complet d'une structure, quelle qu'elle soit, afin d'obtenir, de façon pratique et fiable, une définition ou caractérisation de défauts éventuels permettant d'apprécier immédiatement les conséquences découlant de leur présence ou, dans le temps, l'évolution de leur existence.

L'objet de l'invention vise à la résolution de ce problème.

La fig. 1 montre que l'objet de l'invention consiste à mettre en œuvre un premier élément constitué par une sonde acoustique 3 qui est formée de traducteurs acoustiques d'émission et de réception, disposés selon deux surfaces sphériques concentriques.

La sonde 3 est suspendue à un câble 4 susceptible d'être emmagasiné ou dévidé à partir d'un appareil 5 adapté sur la plateforme 2. Le câble 4 assure une fonction double de suspension physique de l'antenne et de protection des moyens techniques de transmission à distance des ordres et résultats de son fonctionnement.

Dans le cadre d'une réalisation particulière de l'invention, le câble 4 passe, par ailleurs, dans un coulant 4a que l'on peut déplacer à l'aide d'un système de câbles d'élingage passant par des poulies de renvoi 4b placées aux coins du domaine horizontal de la structure à explorer et dont la longueur est réglable par des treuils indépendants. Ce système, ou tout autre moyen adéquat, permet à l'opérateur d'assurer le positionnement horizontal de la sonde à l'intérieur du domaine défini et l'autorise, ainsi, à la rapprocher des éléments de structure explorés sur lesquels il désire focaliser la recherche de défauts.

Dans le cadre d'une application à une structure de conformation autre que celle illustrée, le câble 4 pourrait être remplacé par un élément de suspension du type rigide, tel qu'une barre ou tige associée par des moyens de réglage vertical à un bâti porteur pouvant être déplacé le long d'une voie horizontale.

La sonde 3 est destinée à émettre des impulsions acoustiques dans une bande de fréquence comprise entre 30 KHz et 150 KHz, de manière à recueillir les échos produits par réflexion et rétrodiffraction des éléments constitutifs de la structure, en vue d'obtenir des informations qui sont traitées au sein d'une unité de traitement 6 incluse dans le pupitre de commande de l'opérateur porté par la plateforme 2.

Il doit être considéré aussi que la sonde 3 peut, également, être portée par un appareil sous-marin, à fonctionnement autonome ou non, transportant l'opérateur et son pupitre de commande ou relié à ce dernier par un câble ombilical assurant le transfert des signaux collectés par la sonde 3.

Dans le cadre d'application retenu et illustré, la sonde 3 est constituée, comme illustré par la fig. 2, par une sphère émettrice 7 comprenant un arrangement régulier de traducteurs identiques orientés radialement en étant disposés à l'intérieur d'une coque sphérique protectrice pouvant être réalisée en métal ou en matériau composite. Les traducteurs sont liés mécaniquement à la coque 8 qui assume une fonction de surface radiante, génératrice d'une onde sphérique régulière, dès que les traducteurs sont excités simultanément. Le centre de la coque 8 définit le centre acoustique d'émission. La coque 8 est rendue solidaire d'un élément d'adaptation 9, du type tubulaire, comportant une pièce 10 de liaison avec le câble 4. L'élément d'adaptation 9 assure, également, le support et la protection d'au moins un conducteur destiné à transmettre aux traducteurs l'énergie devant être appliquée pour provoquer l'excitation, en général sous la forme de la décharge d'un élément capacitif adéquat, dans un générateur 3a pouvant être, préférentiellement, placé au cœur même de l'antenne.

La sonde 3 comprend, par ailleurs, une surface réceptrice 11 sphérique, concentrique à la source ou sphère 7 qu'elle englobe. La surface réceptrice 11 est constituée par x cellules sensibles 12 formées par des traducteurs récepteurs qui sont portés, de façon indépendante, par une structure 13 transparente au rayonnement acoustique.

A titre d'exemple, les traducteurs 12 peuvent être montés selon une orientation radiale sur les nœuds de la structure 13 périphérique en treillis métallique ou en toute autre matière inerte. Un tel treillis est, de préférence, constitué de segments 13a formant les arêtes d'un polyèdre régulier. Selon un exemple de réalisation choisi, la structure 13 peut délimiter une enveloppe définissant, à partir de quatre-vingt-dix segments 13a, trente-deux faces de conformation géométrique plane, pentagonale et hexagonale, réunies entre elles par soixante nœuds ou sommets sur lesquels les traducteurs 12 sont rapportés.

Les traducteurs 12 sont reliés à des conducteurs portés et protégés par l'élément d'adaptation 9 sur lequel la structure en treillis 13 est fixée, de manière à être disposée de façon exactement concentrique à la sphère émettrice 7.

Selon la fig. 2, la surface réceptrice 11 peut être enveloppée par une coque de protection 14 réalisée en un matériau acoustiquement transparent. La coque 14 peut être réalisée, par exemple, en un matériau composite.

Les conducteurs, issus des traducteurs 12, sont ramenés à une unité de prétraitement 18 disposée, de préférence, dans un conteneur étanche fixé sur le câble 4.

Cette unité de prétraitement 18 reçoit les signaux provenant de tous les capteurs 12 de réception, effectue sur chacun d'eux une pré-amplification, un traitement préalable de filtrage et d'identification et assure le transfert des informations logiques résultantes vers l'unité de traitement 6 par le câble inclus dans le moyen de suspension 4.

Dans une réalisation préférée de l'invention, illustrée par la fig. 3, l'unité de prétraitement 18 comprend, pour chaque traducteur récepteur 12, un pré-amplificateur 15, un dispositif à gain programmable 16 et un moyen de filtrage adapté 19.

Le moyen 20, qui lui fait suite, effectue la décision logique de détection d'un signal utile et adresse, corrélativement, un code à un registre tampon 21 qui reçoit, par ailleurs, d'un module d'étiquetage 22, toute indication utile quant à l'identification du signal ainsi détecté, c'est-à-dire numéro de voie de réception et date de captation effective.

L'ensemble des informations du registre 21 transite alors dans un multiplexeur numérique 23 pour être envoyé, selon un mode série, sur une liaison coaxiale au sein du câble 4, à l'unité de traitement 6 située sur la plateforme 2 après passage dans un démultiplexeur 23'.

L'unité de traitement 6 a pour fonction d'exploiter les informations transmises par l'unité de prétraitement 18 dans le but de localiser spatialement la sonde au sein de la structure, de reconstituer la géométrie de la partie locale de la structure en comparaison avec les données initiales des plans archivés et de mettre alors en évidence, dans un premier temps, par constat de l'absence d'un écho lié à un point brillant ou à une singularité constitutive, la disparition éventuelle par rupture complète de l'élément de structure correspondant.

L'unité de traitement 6 est associée, dans ce but, à des moyens de visualisation graphique tridimensionnelle 24 permettant de représenter à l'opérateur la géométrie de la structure dans le voisinage de la sonde, de situer la sonde dans cette perspective et de localiser les points brillants liés aux échos détectés. Elle fait appel, dans cette procédure, à une mémoire de masse 25 où sont archivées, notamment, les caractéristiques du treillis constituant la structure et de tout élément mécanique supplémentaire, telles qu'elles sont issues des plans de construction.

Les moyens de l'invention, décrits ci-dessus, sont mis en œuvre de la façon suivante.

La sonde 3 est immergée à l'intérieur de la structure 1, à portée acoustique de cette dernière, par l'intermédiaire de l'appareil 5 qui la maintient à un niveau donné h et dans une position horizontale définie relativement stable, illustrée par la fig. 4. Le générateur 3a est alors alimenté, de manière à délivrer aux traducteurs de la sphère émettrice 7 l'énergie nécessaire à leur excitation, en vue de créer une impulsion acoustique ultra-sonore génératrice d'une onde sphérique régulière. A cet effet, les traducteurs émetteurs de la sphère 7 peuvent être alimentés par la décharge d'un condensateur à travers des circuits de mise en forme d'impulsion, de façon à délivrer un train d'ondes modulé dans la bande de fréquence 30 à 150 KHz et d'une durée de l'ordre de 50 μs, et, dans tous les cas, comprise entre 30 et 100 μs.

Les éléments constitutifs de la structure situés à portée acoustique de la sonde 3 réagissent à la réception de cette impulsion acoustique et génèrent un rayonnement en retour en direction de la sonde 3. L'ensemble des échos produits par les éléments constitutifs traverse ainsi la surface réceptrice 11 qui est acoustiquement transparente.

Tous les traducteurs 12 sont ainsi influencés par chaque signal écho qui fait l'objet d'une pré-amplification par le préamplificateur 15 et d'un contrôle programmé de gain par l'élément 16. Chaque signal est ensuite filtré par le bloc 19 pour être délivré, après codage, au registre tampon 21 après validation et étiquetage par le module 22.

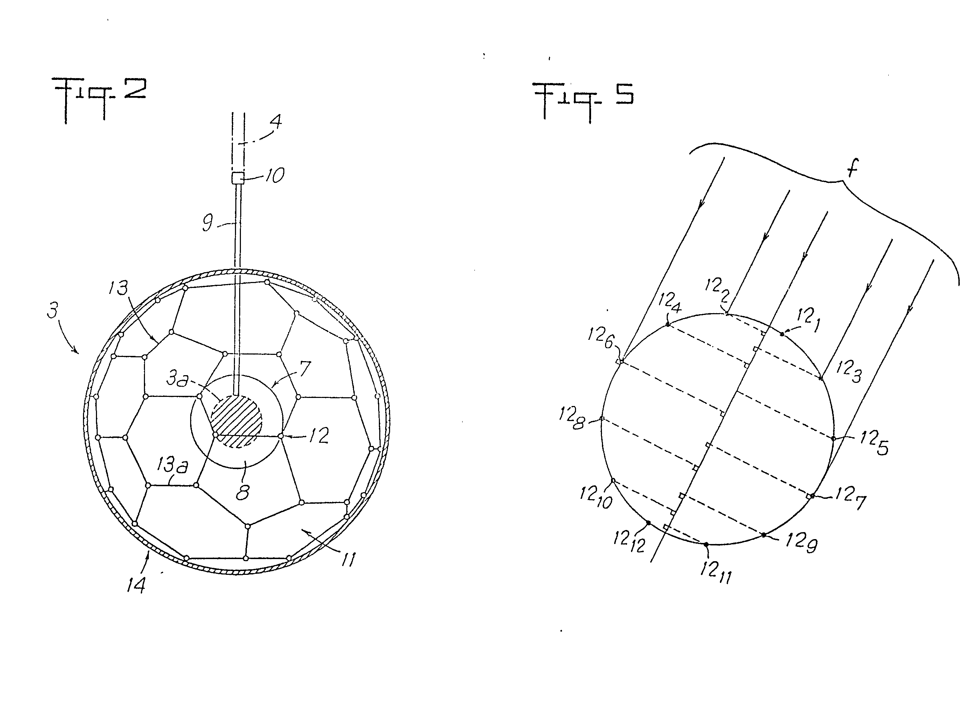

Considérant un faisceau f rétrodiffracté de retour vers la sphère 3, tel que celui illustré par la fig. 5, on conçoit que le signal écho sera initialement perçu par un premier traducteur 12 associé au rayon correspondant au trajet minimal. Le même signal écho sera ensuite perçu successivement par les différents autres traducteurs mais avec, pour chacun d'eux, un décalage dans le temps correspondant aux délais de trajet selon les rayons. C'est ce qui est illustré par la fig. 5 où ne sont représentés, à titre d'exemple, que les rayons et traducteurs situés dans un plan diamétral de la sphère 3. Dans cet esprit, les indices ajoutés à la référence 12 correspondent à l'ordre dans le temps de la perception du signal écho.

Il en est, évidemment, de même pour tout faisceau de rayons rétrodiffractés, émanant de toute direction, parallèle ou divergent.

Tous les signaux échos codés comme ci-dessus transitent dans le multiplexeur 23 pour être envoyés, selon un mode série, sur une liaison co-axiale du câble 4, à l'unité de calcul en surface 6 après passage dans le démultiplexeur 23'.

La première phase de fonctionnement automatique du procédé de l'invention consiste à détecter les échos des points brillants pour la localisation de la sonde.

Le calculateur 6, qui a mémorisé tous les signaux codés d'échos, recherche dans sa mémoire le premier signal écho reçu dans le temps et qui correspond au point d'intéraction avec l'élément de structure le plus proche. La lecture du code d'identification permet de déterminer la position, sur la sphère, du traducteur 12 concerné et, par conséquent, de définir l'orientation approximative du faisceau rétrodiffracté qui est à l'origine de l'écho.

Le calculateur 6 est programmé pour calculer les fourchettes de dates probables auxquelles un front d'onde-écho donné, capté par un premier traducteur 12, doit ensuite être perçu successivement par les autres traducteurs de la surface 11. Les signaux ainsi triés constituent donc une suite datée associée à un faisceau rétrodiffracté donné. Le calculateur 6 cherche donc à constituer cette suite et affine ainsi progressivement sa connaissance de l'orientation du faisceau rétrodiffracté.

Lorsque la première suite, correspondant au premier front d'onde perçu, est bâtie, le calculateur 6 s'attache ensuite à constituer selon le même processus les suites éventuellement imbriquées correspondant aux fronts d'onde rétrodiffractés suivants successivement captés.

A partir des données ainsi acquises, le calculateur 6 détermine, dans une première phase, les coordonnées sphériques de chaque point brillant par rapport au centre de la sonde dans un référentiel lié à la sonde. A partir des données géométriques constructives de la structure dont il dispose en mémoire, il estime par calcul la position de la sonde et son orientation dans le référentiel de la structure.

Le traitement des données est effectué en intégrant la mesure de niveau d'immersion de la sonde 3, de manière à éviter toute ambiguïté d'appréciation qui pourrait résulter d'une réalisation modulaire répétitive de la structure immergée.

Les moyens de l'invention, tels que définis ci-dessus, permettent, par conséquent, dans un délai particulièrement court et par l'intermédiaire de moyens techniques d'encombrement faible, de localiser la sonde dans la structure de façon précise.

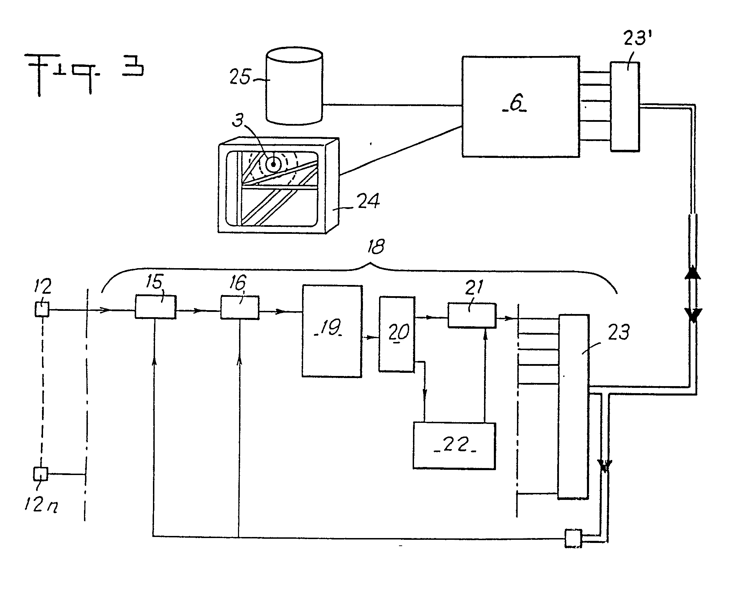

La seconde étape de cette première phase consiste alors à matérialiser, par les moyens de visualisation 24, tous les points brillants qui ont été calculés de façon à pouvoir ensuite les réunir pour faire apparaître la constitution locale de la structure telle que «vue» à partir de l'antenne 3. La fig. 6 montre, à titre d'exemple, le diagramme pouvant être obtenu à partir des moyens 24. Sur ce diagramme, le point brillant le plus proche de l'antenne porte la référence A, tous les points successivement distants étant identifiés par la succession des lettres de l'alphabet, le dernier point, dans la limite de portée considérée, étant désigné par la lettre J.

Le diagramme obtenu est ensuite comparé avec l'image (fig. 4) géométrique locale stockée dans la mémoire 25. Cette comparaison permet de constater que les points échos correspondent aux points acoustiquement brillants A, B, C, D, G, H, I et aux points singuliers E, F, J. Par contre, si cette comparaison permet de détecter un point écho a n'appartenant à aucune des deux catégories ci-dessus, il s'agit, compte tenu de sa position, d'une source de rétrodiffraction à associer à un élément constitutif défini de la structure. Une telle source ne peut être interprétable que comme une singularité manifeste non prévue de la structure, cette singularité pouvant être due à un défaut marquant (fissuration d'un bracon par exemple).

L'exemple donné ci-dessus ne définit pas les limites du procédé. L'absence d'un point écho, où il devrait normalement s'en trouver au moins un, traduit, en effet, à l'inverse, la disparition d'une membrure de structure.

La première phase du procédé permet donc, dans un premier temps, de disposer d'une appréciation globale de l'intégrité de la structure et d'une caractérisation des défauts les plus marquants par comparaison entre le diagramme selon la fig. 6 avec le plan local correspondant archivé par exemple la fig. 4.

On conçoit, toutefois, que l'on ne souhaite pas se limiter à ce niveau d'appréciation de l'intégrité dans de nombreux cas. Il apparaît, en effet, important aussi de pouvoir déceler systématiquement les défauts de structure, tels que fissures, qui seront responsables ultérieurement, s'ils sont négligés ou ignorés, d'une rupture de l'élément constitutif les portant.

Le procédé selon l'invention vise, dans une deuxième phase, à détecter de tels défauts. A cette fin, le procédé de l'invention met en œuvre, dans cette application, les propriétés physiques des ondes de LAMB.

Il y a, en général, réflexion totale du rayon acoustique correspondant à un point brillant atteint par un rayon normal.

Par contre, cette réflexion n'est que partielle pour des incidences critiques particulières. Dans le cas d'une incidence de 30°, l'onde acoustique induit, avec un fort effet de couplage, une onde de LAMB antisymétrique d'ordre zéro dont la vitesse de groupe est de l'ordre de 3100 m/s pour des paquets d'ondes situés dans la bande de fréquence d'utilisation choisie (30 à 150 KHz) et pour les épaisseurs de parois des éléments constitutifs pratiquement utilisés dans les structures sous-marines devant être analysées.

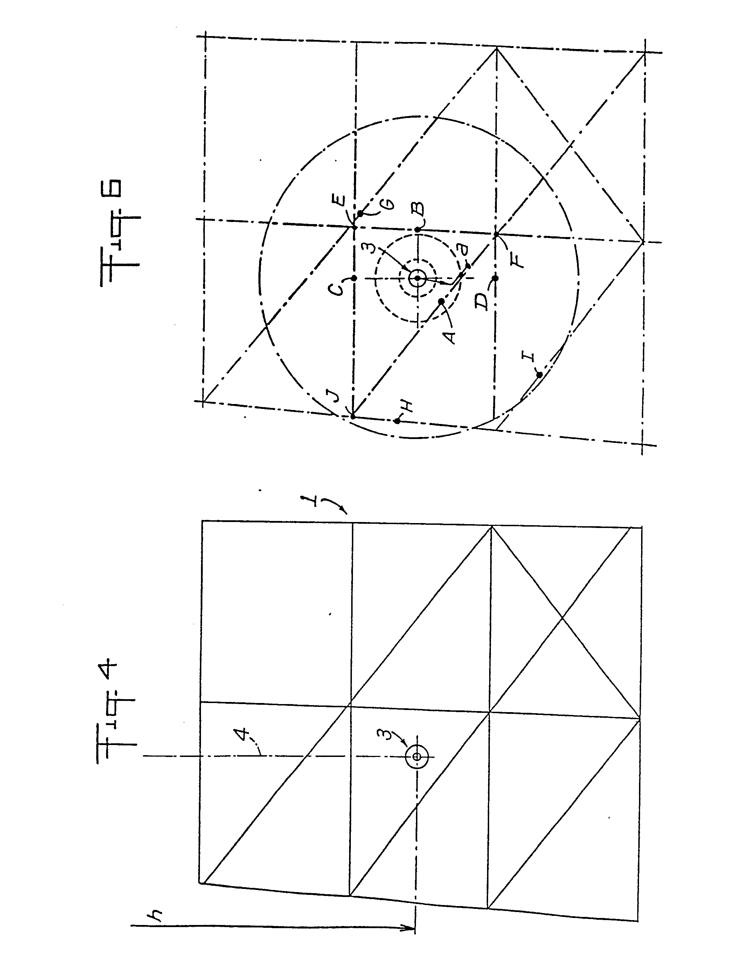

Cette onde de LAMB (fig. 7), générée par un rayon acoustique incident Ri, est caractérisée par un rayon mécanique Rm situé dans le plan PI du rayon acoustique incident. Le rayon Rm donne lieu à réémission d'une onde acoustique caractérisée par des rayons Ri' symétriques du rayon incident Ri, ce qui se traduit par une atténuation du rayon mécanique dans son parcours.

L'onde de LAMB et, corrélativement, le rayon mécanique Rm sont réfléchis par tout défaut d, de type fissure, rencontré dans le parcours et, de façon classique, symétriquement par rapport à la normale nd à la fissure. Le rayon mécanique réfléchi Rmr donne lieu à émission de rayons acoustiques rétrodiffractés Rr, émergeant réciproquement à 30° de la normale à l'élément de structure et qui portent donc un signal écho caractéristique de la présence de la fissure. Dans le cas où le rayon mécanique Rm est normal à la fissure, le trajet des rayons rétrodiffractés est inverse à celui des rayons incidents et un des rayons Rr coïncide en particulier avec Ri. Ce sont ces rayons inverses et leurs voisins qui sont exploités dans la seconde phase du procédé de l'invention en considérant que la création d'échos par intéraction d'un faisceau sphérique incident avec la structure repose sur les principes physiques suivants:

- Compte tenu des longueurs d'onde à associer aux signaux acoustiques émis (bande de fréquence 30 à 150 KHz), dans l'eau et dans le métal (longueurs d'onde d'ordre de grandeur centimétrique), les effets de propogation acoustique dans ces deux milieux peuvent être décrits selon une théorie de rayons.
- Compte tenu de l'ouverture de la sonde sphérique de réception (plusieurs dizaines de longueurs d'onde acoustique), il résulte que les éléments de structure les plus proches de la sonde à analyser se trouveront toujours dans la zone de champ proche, au sens de FRESNEL, de cette antenne et qu'en conséquence la fonction de rayonnement et donc, réciproquement, de captation de cette sonde, est caractérisée par un faisceau uniforme de rayons normaux aux fronts d'onde confiné à l'intérieur du contour apparent circulaire de l'antenne. Cette caractéristique d'ouverture limitée se conserve pour les mêmes raisons dans les faisceaux induits dans les structures métalliques.

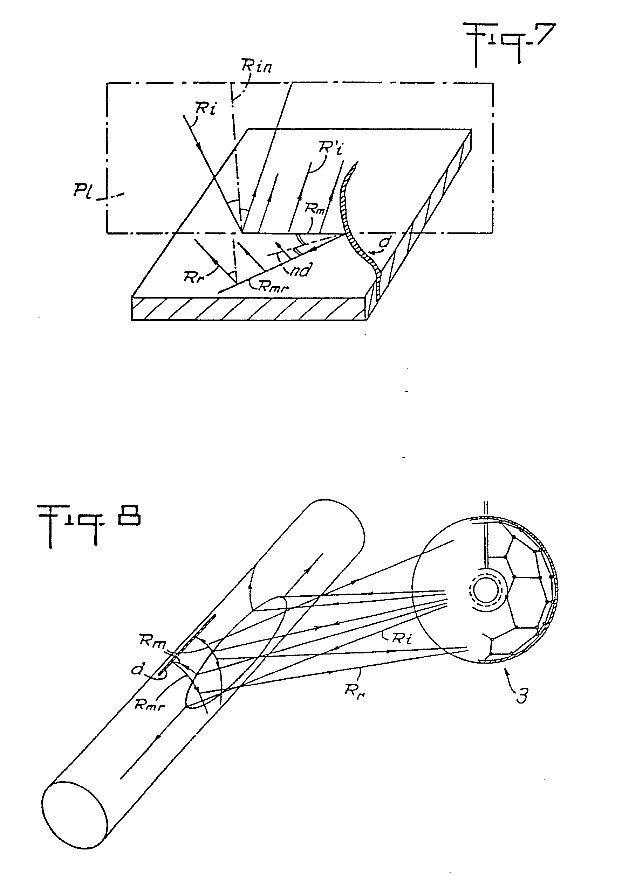

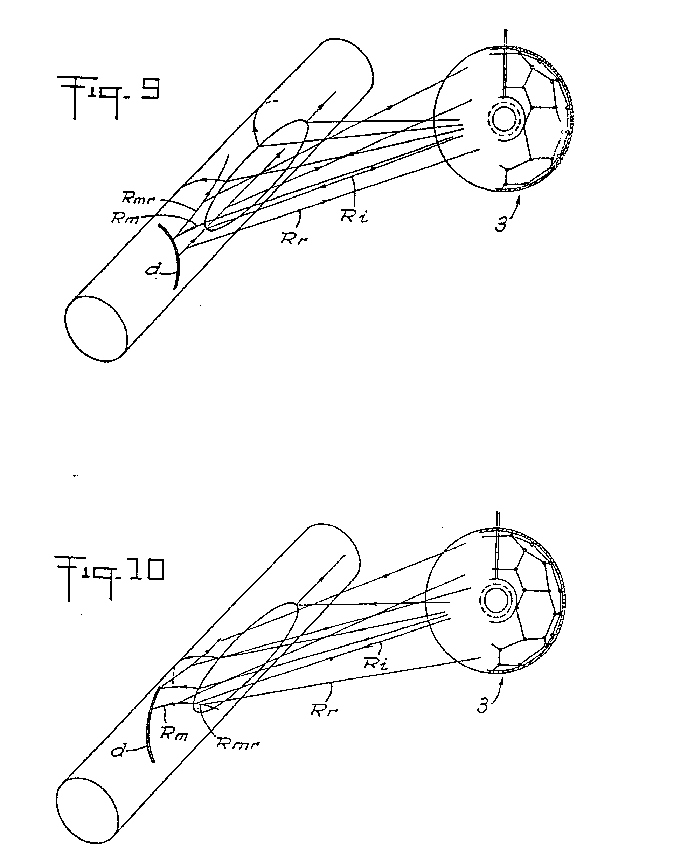

L'application de ces principes, à la détection de défauts à partir des faisceaux de rayons émis et captés par la sonde sphérique décrite, est illustrée par les trois cas de figures pouvant être rencontrés. La fig. 8 illustre le cas d'une fissure longitudinale, la fig. 9 le cas d'une fissure transversale (dans un plan de section droite d'une membrure) et la fig. 10 le cas d'une fissure oblique. Dans ces figures, les mêmes références que celles portées par la fig. 7 désignent les mêmes éléments caractéristiques.

Les faisceaux rétrodiffractés représentés, qui portent les échos émanant de la fissure, sont caractéristiques de surfaces d'onde que l'on sélectionnera en réception par un traitement approprié des suites d'échos associés captés, dans le but de concentrer les capacités de détection du système sur les défauts présumés recherchés.

Ce traitement est réalisé de la façon suivante par les circuits précédemment décrits.

Pour mettre en œuvre, de façon pratique, les principes ci-dessus, il convient de pouvoir conformer électroniquement ou «préformer» la surface réceptrice 11 de façon, en quelque sorte, à pouvoir sélectionner pour l'écoute le faisceau de rayons acoustiques qui sera issu d'une zone de la structure ou, plus précisément, d'un élément de la structure prédéfini sous l'incidence de 30° environ. La préformation du faisceau d'écoute implique un traitement de la suite des échos perçus et la reconstitution des fronts d'onde correspondants. La famille des normales à ces fronts d'onde définit le faisceau des rayons rétrodiffractés que l'on rétropopage dans l'eau et les éléments de structure rencontrés.

Différents procédés peuvent être mis en œuvre dans ce but.

On peut, par exemple, associer les différents traducteurs 12 à des lignes à retard réglables, de façon à réaliser un décalage relatif dans le temps pour disposer ainsi d'une perception globale du signal écho porté par le front d'onde sélectionné après tir. Par un tel moyen, toute orientation radiale d'écoute peut ainsi être choisie et permet une investigation précise de tout ou partie d'un élément de structure à partir du moment où la sonde 3 a été positionnée et localisée comme décrit ci-dessus.

Dans une telle phase, tout écho perçu résultant du traitement de «préformation» décrit précédemment sera caractéristique de la présence, dans la zone «écoutée» d'un défaut du type fissure qui sera localisé dans le métal comme le lieu des intersections des rayons incidents émis et des rayons rétrodiffractés captés.

Inversement, toute absence d'écho dans un tel cas peut être considérée comme significative d'une absence de défaut perceptible par les caractéristiques de résolution des moyens de l'invention, c'est-à-dire, dans le cas présent, orientation normale au faisceau et dimension transversale inférieure à l'ordre décimétrique.

On peut aussi mettre en œuvre un algorithme de préformation synthétique, au sein du calculateur 6, permettant de sélectionner à la réception les faisceaux de rayons acoustiques rétrodiffractés qui, convenablement représentés à l'opérateur sur le moyen de visualisation 24, lui permettent de conduire la recherche systématique des défauts.

Le moyen de visualisation 24 rend, en effet, apparent sur la perspective de la zone de structure voisine de la sonde, la sonde elle-même et la faisceau sélectionné dans son parcours direct et rétrodiffracté et donc leur zone d'intersection, caractéristique de la zone de présence présumée d'une fissure.

L'algorithme de préformation synthétique consiste à

- choisir le traducteur dont la direction radiale correspond à celle présentant une incidence voisine de 30° par rapport à la zone de la structure à explorer,
- évaluer le front d'onde moyen global perpendiculaire à cette direction, correspondant à un écho perçu par ce premier traducteur et qui doit, successivement, être perçu par les autres traducteurs dans des fenêtres temporelles définies par l'évaluation,
- prendre en compte dans la collection d'échos, reçus et mémorisés à la suite d'une seconde émission acoustique, ceux qui tombent dans les fenêtres prédéfinies,
- analyser la cohérence de cette suite pour décider de la présence ou de l'absence d'un défaut.

Dans l'affirmative, il localise la position du défaut dans ce faisceau et le fait apparaître sur l'unité de visualisation.

Par ce moyen, un opérateur peut ainsi explorer précisément un élément constitutif d'une structure immergée sur toute sa longueur et sa périphérie, puisqu'il suffit initialement de choisir les points de vue successifs où placer la sonde, de l'amener par son moyen de manutention, de contrôler la position horizontale effectivement prise par la sonde et de la corriger.

Il doit être considéré que la seconde phase du procédé de l'invention peut faire intervenir un traitement propre à utiliser, notamment dans le cas d'évaluation et de recherche probable d'une suite attendue d'échos, les informations perçues à la suite du premier tir effectué en vue de la localisation de la sonde et de l'examen d'intégrité. Dans un tel cas, les suites d'échos sont, après cette première étape, gardés en mémoire avec leurs caractéristiques d'identification.

La procédure de détection de défauts, du type fissure, peut être la suivante:

– l'opérateur déplace la sonde au sein de la structure à l'aide du moyen pour la placer à proximité de la zone à explorer. La méthode de détection des défauts repose sur la rétropropagation d'ondes mécaniques réfléchies sur les défauts. Les ondes mécaniques sont induites dans la structure par des rayons la frappant sous l'incidence la plus adéquate (fig. 4, 5 et 6),
– le moyen de visualisation 24, piloté par le calculateur 6 présente à l'opérateur une image de la structure au voisinage de la sonde sur laquelle apparaît nettement, par exemple par l'emploi de couleurs, la zone finement explorée. Les défauts détectés seront aussi représentés sur cette image,
– l'opérateur déplace la sonde de proche en proche, afin d'explorer toute la structure par action sur le treuil dans le sens vertical et par le moyen 4a dans le plan horizontal. Le moyen de visualisation 24 lui indique la zone en cours d'exploration et les zones précédemment explorées sous toutes les directions, sachant qu'un défaut est détecté seulement s'il se trouve quasi perpendiculaire aux ondes mécaniques se propageant dans la structure. Le calculateur pourra aider l'utilisateur à déplacer la sonde dans la structure afin d'effectuer une recherche de défauts optimisée.

L'invention n'est pas limitée à l'exemple décrit et représenté, car diverses modifications peuvent y être apportées sans sortir de son cadre défini par la teneur des revendications.

**Revendications**

1. Procédé de recherche et de caractérisation de défauts d'une structure métallique connue immergée, dans lequel on place une sonde acoustique d'émission-réception à portée acoustique d'une structure métallique connue immergée, caractérisé en ce qu'il consiste à:

– placer une sonde acoustique d'émission-réception à plusieurs capteurs,
– émettre au moins une impulsion acoustique ultra-sonore comprise entre 30 et 150 KHz,
– recueillir les signaux échos de n points brillants de la structure,
– déterminer les coordonnées angulaires par rapport à la sonde des points brillants par classement des informations de temps d'arrivée des divers échos aux divers capteurs de réception de la sonde, selon différentes suites d'instants caractéristiques des fronts d'ondes émanant de n points réfléchissants localisés,
– déterminer les coordonnées théoriques des différents points brillants par rapport à la structure,
– déterminer à partir de ces coordonnées la position de la sonde,
– afficher le diagramme des points brillants,
– comparer ce diagramme avec l'image théorique archivée de la partie locale correspondante de la structure,
– mettre en évidence, par comparaison, toute absence ou toute présence de points réfléchissants par rapport aux points brillants ou singuliers théoriques de la structure.

2. Procédé selon la revendication 1, caractérisé en ce qu'en plus on préforme la sonde de réception pour orienter l'écoute dans la direction d'une zone de la structure à analyser, de manière à recevoir, après un second tir, les rayons acoustiques rétrodiffractés par un défaut et correspondant à une onde de LAMB induite dans l'élément de structure par un rayonnement acoustique incident présentant une incidence de 30 degrés environ.

3. Procédé selon la revendication 1 ou 2, caractérisé en ce qu'on utilise une sonde acoustique à émission et réception sphériques concentriques.

4. Procédé selon la revendication 1, 2 ou 3, caractérisé en ce que l'impulsion possède une durée comprise entre 30 et 100 µs.

5. Procédé selon la revendication 2 ou 3, caractérisé en ce que la sonde de réception est orientée vers la zone de la structure à explorer en faisant intervenir des lignes à retard réglable pour les différents traducteurs.

6. Procédé selon la revendication 2 ou 3, caractérisé en ce que la sonde de réception est préformée en:

– choisissant le traducteur dont la direction radiale correspond à celle présentant une incidence voisine de 30° par rapport à la zone de la structure à explorer,
– évaluant le front d'onde moyen global perpendiculaire à cette direction, correspondant à un écho perçu par ce premier traducteur et qui doit, successivement, être perçu par les autres traducteurs dans des fenêtres temporelles définies par l'évaluation,
– prenant en compte, dans la collection d'échos reçus et mémorisés à la suite d'une seconde émission acoustique, ceux qui tombent dans les fenêtres prédéfinies,

– analysant la cohérence de cette suite pour décider de la présence ou de l'absence d'un défaut.

7. Procédé selon la revendication 5 ou 6, caractérisé en ce que la direction d'écoute de la sonde de réception est visualisée par rapport à une visualisation de la zone locale de la structure à analyser.

8. Procédé selon la revendication 5 ou 6, caractérisé en ce qu'on dirige la sonde de réception après une émission de localisation et de recherche d'intégrité, puis en ce qu'on utilise l'ensemble des échos reçus et mémorisés pour la recherche de rayons acoustiques rétrodiffractés correspondant à une onde de LAMB.

9. Procédé selon la revendication 5 ou 6, caractérisé en ce qu'on émet une impulsion acoustique en recherche de localisation et d'examen d'intégrité, en ce qu'on dirige la sonde, puis en ce qu'on procède à l'émission d'une nouvelle impulsion en vue de l'appréciation de rayons acoustiques rétrodiffractés correspondant à une onde de LAMB.

10. Dispositif de recherche et de caractérisation de défauts d'une structure métallique connue immergée comprenant:

– une sonde acoustique (3) comportant:
un moyen (9) de support et d'immobilisation relative dans le milieu liquide,
une source (7) émettrice d'impulsions acoustiques,
une surface (11) réceptrice sensible,
– un moyen de prétraitement (18) des signaux échos comprenant au moins un préamplificateur (15),
– une unité (23-23') de transmission des données prétraitées,
– et une unité principale de traitement (6) comprenant des moyens de visualisation (24),
caractérisé en ce que:
– la sonde acoustique comporte une surface (11) réceptrice formée de x cellules sensibles (12),
– le moyen de prétraitement (18) comprend pour chaque cellule sensible (12):
un filtre (19) associé à un module de comparaison (20),
et un module d'adressage-étiquetage (21, 22) des signaux filtrés,
– l'unité principale de traitement (6) comprend:
un calculateur,
une mémoire de masse (25),
des moyens de visualisation (24) tridimensionnels.

11. Dispositif selon la revendication 10, caractérisé en ce que l'unité principale de traitement comprend, en outre, des moyens de préformation synthétique de la surface de réception.

12. Dispositif selon la revendication 10 ou 11, caractérisé en ce que, dans l'application à une structure en treillis, la sonde acoustique (3) comprend une source émettrice (7) sphérique et une surface réceptrice (11) concentrique formée par x cellules sensibles (12) indépendantes portées par une structure (13) transparente au rayonnement acoustique réfléchi.

**Patentansprüche**

1. Verfahren zum Aufsuchen und Charakterisieren von Defekten an einer bekannten untergetauchten metallischen Struktur, bei dem in akustischer Reichweite einer bekannten untergetauchten metallischen Struktur eine Ausstrahlungs-/Empfangs-Schallsonde angebracht wird, gekennzeichnet durch die Schritte des Anbringens einer Ausstrahlungs-/Empfangs-Schallsonde mit mehreren Messfühlern, des Ausstrahlens wenigstens eines Ultraschall-Impulssignals zwischen 30 und 150 KHz, des Empfangs der Echosignale von n ausgezeichneten Punkten der Struktur, der Bestimmung der Winkelkoordinaten der ausgezeichneten Punkte in bezug auf die Sonde mittels Klassifizierung der aus den Ankunftszeiten der verschiedenen Echos an den verschiedenen Messfühlern der Sonde bestehenden Information entsprechend den unterschiedlichen Reihenfolgen der charakteristischen Zeitpunkte der von den n räumlich bestimmten, reflektierenden Punkten ausgehenden Wellenfronten, der Bestimmung der theoretischen Koordinaten der verschiedenen ausgezeichneten Punkte in bezug auf die Struktur, der Bestimmung der Sondenposition auf der Grundlage dieser Koordinaten, der Darstellung des Diagramms der ausgezeichneten Punkte, des Vergleichens dieses Diagramms mit dem gespeicherten theoretischen Bild des entsprechenden räumlich begrenzten Bereichs der Struktur, und des Nachweisens des vollständigen Fehlens oder vollständigen Vorhandenseins von reflektierenden Punkten in bezug auf die ausgezeichneten oder singulären theoretischen Punkte der Struktur mittels des Vergleichs.

2. Verfahren gemäss Anspruch 1, dadurch gekennzeichnet, dass die Empfangssonde so ausgebildet wird, dass die Hörrichtung in Richtung einer zu analysierenden Zone der Struktur eingestellt werden kann, so dass nach einer zweiten Impulsabgabe die von einem Defekt zurückgelenkten Schallwellen empfangen werden, wobei die Schallwellen einer Lambwelle entsprechen, die durch in einem Einfallswinkel von ungefähr 30° auftreffende Schallwellen in dem Strukturelement hervorgerufen wird.

3. Verfahren gemäss Anspruch 1 oder 2, dadurch gekennzeichnet, dass eine Schallsonde mit sphärischer, konzentrischer Ausstrahlung und Aufnahme verwendet wird.

4. Verfahren gemäss Anspruch 1, 2 oder 3, dadurch gekennzeichnet, dass das Impulssignal eine Dauer zwischen 30 und 100 µs besitzt.

5. Verfahren gemäss Anspruch 2 oder 3, dadurch gekennzeichnet, dass die Empfangssonde in Richtung der zu untersuchenden Zone der Struktur orientiert wird, indem die für die verschiedenen Wandler einstellbaren Verzögerungsstrecken berücksichtigt werden.

6. Verfahren gemäss Anspruch 2 oder 3, dadurch gekennzeichnet, dass die Empfangssonde so ausgebildet ist, dass sie denjenigen Wandler wählt, dessen radiale Richtung derjenigen entspricht, die einen Einfall von ungefähr 30° in bezug auf die zu untersuchende Zone der Struktur darstellt, die zu dieser Richtung senkrechte mittlere globale Wellenfront auswertet, die einem vom ersten Wandler empfangenen Echo entspricht, welches sukzessive in den durch die Auswertung definierten Zeitausschnitten von den anderen Wandlern empfangen wird, aus der Menge der empfangenen und gespeicherten Echos bei einer folgenden zweiten Schallemission diejenigen berücksichtigt, die in die vordefinierten Ausschnitte fallen, und die Kohärenz dieser Folge analysiert, um zu entscheiden, ob ein Defekt vorhanden ist oder fehlt.

7. Verfahren gemäss Anspruch 5 oder 6, dadurch gekennzeichnet, dass die Hörrichtung der Empfangssonde in einer optischen Wiedergabe der räumlich begrenzten Zone der zu analysierenden Struktur dargestellt wird.

8. Verfahren gemäss Anspruch 5 und 6, dadurch gekennzeichnet, dass die Empfangssonde nach einer Emission zur räumlichen Eingrenzung und zur Untersuchung der Unversehrtheit weitergeführt wird und anschliessend die Gesamtheit der empfangenen und gespeicherten Echos für die Untersuchung der einer Lambwelle entsprechenden zurückgelenkten Schallwellen verwendet wird.

9. Verfahren gemäss Anspruch 5 oder 6, dadurch gekennzeichnet, dass beim Aufsuchen des Ortes und der Untersuchung der Unversehrtheit ein Schallimpuls ausgesendet wird, die Sonde weitergeführt wird und anschliessend zum Zwecke der Auswertung der einer Lambwelle entsprechenden zurückgelenkten Schallwellen die Emission eines neuen Impulses veranlasst wird.

10. Vorrichtung zum Aufsuchen und Charakterisieren von Defekten an einer bekannten untergetauchten metallischen Struktur, mit einer Schallsonde (3), die eine der Unterstützung und dem Festhalten relativ zum flüssigen Milieu dienende Einrichtung (9), eine dem Aussenden von Schallimpulsen dienende Quelle (7) und eine empfindliche Empfangsoberfläche (11) aufweist, mit einer Einrichtung (18) zur Vorbearbeitung der Echosignale, die wenigstens einen Vorverstärker (15) enthält, mit einem Bauteil (23 bis 23') für die Übertragung der vorbearbeiteten Daten, und mit einem Hauptbauteil (6) für die Bearbeitung, das eine Anzeigeeinrichtung (24) enthält, dadurch gekennzeichnet, dass die Schallsonde eine aus x empfindlichen Zellen (12) gebildete Aufnahmeoberfläche (11) aufweist, die Einrichtung (18) zur Vorbearbeitung pro empfindlicher Zelle (12) ein mit einem Vergleichsmodul (20) verbundenes Filter (19) und ein Adressierungs-/Etikettierungsmodul (21, 22) für die gefilterten Signale aufweist und das Hauptbauteil für die Bearbeitung (6) einen Rechner, einen Massenspeicher (25) und eine dreidimensionale Anzeigeeinrichtung (24) aufweist.

11. Vorrichtung gemäss Anspruch 10, dadurch gekennzeichnet, dass das Hauptbauteil für die Bearbeitung ferner Einrichtungen für die vorherige künstliche Gestaltung der Aufnahmeoberfläche aufweist.

12. Vorrichtung gemäss Anspruch 10 oder 11, dadurch gekennzeichnet, dass die Schallsonde (3) bei der Anwendung in einer Gitterstruktur eine sphärische Abstrahlungsquelle (7) und eine konzentrische Aufnahmeoberfläche (11) aufweist, wobei die Aufnahmefläche (11) durch x empfindliche Zellen gebildet wird, die durch eine für reflektierte Schallwellen durchlässige Struktur (13) getragen werden.

## Claims

1. Method for locating and characterizing flaws in a known, submerged metal structure in which a transmitting-receiving acoustic probe is placed within acoustic range of a known submerged metallic structure, characterized in that it consists in:

– placing an acoustic transmitting and receiving probe having a plurality of transducers;
– emitting at least one ultrasonic pulse in the 30–150 kHz frequency range;
– picking up echo signals from n specular reflection points of the structure;
– determining the angular coordinates of the specular points by ordering the data concerning the arrival times of the various echoes at the sound probe's or antenna's various receiving transducers, according to various characteristic time sequences associated with wavefronts coming from n localized reflection points;
– determining the theoretical coordinates of the various specular points;
– determining the position of said probe from said coordinate data;
– displaying the pattern of said specular points;
– comparing said pattern with the archived theoretical image of local corresponding part of the structure;
– and revealing any missing or additional specular points by comparison with the structure's theoretical specular of singular points.

2. Method according to claim 1, characterized in that said probe's receiving probe is furthermore preconfigured to steer the scan in the direction of a specific area of the structure being inspected, such as to receive, after a second firing, the acoustic rays backdiffracted by a flaw and corresponding to a Lamb wave generated in the relevant structural member by an incident acoustic radiation with an angle of incidence of approximately 30°.

3. Method according to claim 1 or 2, characterized in that scanning is carried out by an acoustic probe with a concentric spherical transmitting and receiving pattern.

4. Method according to claims 1, 2 or 3, characterized in that the emitted pulse is given a duration of between 30 and 100 µs.

5. Method according to claims 2 or 3, characterized in that the receiving antenna is oriented toward the area of the structure to be scanned, using adjustable delay lines for the various transducers.

6. Method according to claims 2 or 3, characterized in that said receiving antenna is preconfigured by:

- picking the transducer whose radial direction corresponds to that having an angle of incidence of roughly 30° with the structural area to be scanned;
- estimating the mean global wavefront which is perpendicular to this direction, corresponding to an echo perceived by said first transducer and which must later be picked up in sequence by the other transducers in time slots defined by said estimating step;
- taking into account those echoes, among all the ones received and stored pursuant to a second acoustic emission, which fall into the predetermined time slots;
- and analyzing the consistency of timed echo sequence to decide about the presence or absence of a flaw.

7. Method according to claims 5 or 6, characterized in that the scanning direction of the receiving antenna is displayed in relation to an image of the local area of the structure to be analyzed.

8. Method according to claims 5 or 6, characterized in that said receiving antenna is directionally orientated following the emission of a localizing and structural integrity scanning pulse, whereafter the whole set of received and stored echoes is utilized in scanning for back-diffracted acoustic rays corresponding to a Lamb wave.

9. Method according to claims 5 or 6, characterized in that a scanning pulse is emitted for purposes of localization and checking structural integrity, in that the antenna is orientated, and that a new pulse is emitted for the purpose of evaluating the back-diffracted acoustic rays corresponding to a Lamb wave.

10. Device for locating and characterizing flaws in a known, submerged metal structure, comprising:

- an acoustic probe (3) having:
means (9) for support and relative immobilization in the liquid medium,
an acoustic pulse emitting source (7),
a sensing receiving surface (11),
- echo signal pre-processing means (18) comprising at least a preamplifier (15),
- a pre-processed data transmission unit (23–23′),
- and a main processing unit (6) including display means (24),
characterized in that:
- the acoustic probe has a receiving surface (11) formed of x sensitive cells (12),
- the pre-processing means (18) comprises, for each sensitive cell (12):
a filter (19) associated to a comparator module (20),
an addressing-labelling module (21, 22) for the filtered signals,
- the main processing unit (6) comprises:
a calculator,
a mass memory (25),
three-dimensional display means (24).

11. Device according to claim 10, characterized in that said main processing unit further comprises preconfiguration synthesizing means for the receiving surface of said antenna.

12. Device according to claims 10 or 11, characterized in that, in an application in the context of a trellis frame, said acoustic probe (3) comprises a spherical transmitting source (7) and a concentrically arranged spherical receiving surface (11), said latter surface being formed by x individual sensing cells (12) carried on a structure (13) which is transparent to back-reflected acoustic radiation.

Fig. 1

Fig. 2

Fig. 5

EP 0 158 569 B1

Fig. 3

Fig. 6

Fig. 4

Fig.7

Fig 8

Fig. 9

Fig. 10